# EUROPEAN PATENT APPLICATION

(11) **EP 3 117 897 A1**
(43) Date of publication of application: **18.01.2017**
(21) Application number: 15762221.8
(22) Date of filing: 11.03.2015
(51) Int. Cl.: B01J 13/04, C07K 1/02

(54) **DROPLET PRODUCING DEVICE, DROPLET PRODUCING METHOD, LIPOSOME PRODUCING METHOD, FIXTURE, AND DROPLET PRODUCING KIT**

(30) Priority: 11.03.2014 JP 2014048037
(71) Applicant: Toppan Printing Co., Ltd., Tokyo 110-0016 (JP); Tokyo Institute of Technology, Tokyo 152-8550 (JP)
(72) Inventor: TAKINOUE Masahiro, Tokyo 152-8550 (JP); MORITA Masamune, Tokyo 152-8550 (JP); YAMASHITA Hitoyoshi, Tokyo 152-8550 (JP)
(74) Representative: TBK
(86) International application number: PCT/JP2015/057113
(87) International publication number: WO 2015/137380

(57) **Abstract**

A droplet producing device (1) includes an outer tube (2); and an inner tube (3) that is arranged inside the outer tube (2) and feeds a droplet raw material, in which an inner tube discharge port (3b) opens to an inner tube tip portion (3a) formed on a downstream in a fluid feed direction, an outer tube discharge port (2b) opens to an outer tube tip portion (2a) formed on the downstream in the fluid feed direction, and in which a gap (2c) is formed between the outer tube (2) and the inner tube (3). It is preferable that the inner tube discharge port (3b) be provided inside the outer tube on an upstream of the outer tube discharge port (2b) in the fluid feed direction.

## Description

### TECHNICAL FIELD

The present invention relates to a droplet producing device that can produce droplets having excellent monodispersity from a small amount of droplet raw material, a droplet producing method using the droplet producing device, a liposome producing method, a fixture used for fixation of the droplet producing device, and a droplet producing kit. Priority is claimed on Japanese Patent Application No. 2014-048037, filed March 11, 2014, the content of which is incorporated herein by reference.

### BACKGROUND ART

In the related art, a micro-flow channel made on a substrate by photolithography is used for production of minute droplets. A method of making a droplet raw material fluid flow into a flow channel, and controlling the operation of a pump for fluid feed to make the droplet raw material into droplets is performed. For example, in a device shown in FIG. 3 of Non-Patent Document 1, a flow channel other than the above flow channel has a cross-shaped flow channel shape, which orthogonally intersects the above flow channel, in a terminal of the above flow channel through which the droplet raw material flows. When the droplet raw material fluid reaches the terminal of the flow channel, another fluid that does not mix with the droplet raw material fluid may be intermittently pushed out from the orthogonally intersecting flow channel toward a fluid current of the droplet raw material by pump control, and droplets are produced such that fluid is cut out in a volume equivalent to one droplet from the fluid current of the droplet raw material.

However, in order to make the micro-flow channel, it is necessary to produce facilities such as a dedicated device and a dedicated work environment for performing photolithography, and it is not easy to newly produce such a facility for production of droplets. Additionally, although it is necessary to make a plurality of micro-flow channels in a case where droplets needs to be produced under a plurality of sets of conditions, there is a problem in that manufacturing the micro-flow channels has high costs.

Usually, a syringe pump is used for feeding of fluid to the flow channel. However, in a case where a syringe pump is used, a connecting part the inside of a syringe or between the syringe and the flow channel needs to be filled with the droplet raw material fluid. Therefore, it is necessary to produce a larger amount of droplet raw material than the amount of droplet raw material equivalent to produced droplets. In a case where there is scarcity of a sample to be used as the droplet raw material, there is a strong demand for reducing loss of such a raw material.

Additionally, if high-quality droplets having excellent monodispersity are to be produced, the syringe pump should be precisely operated, and the adjustment thereof is complicated. Moreover, there is also a drawback that the production speed of droplets is lowered due to this requirement for precise fluid feed.

### PRIOR ART DOCUMENTS

### NON-PATENT DOCUMENTS

[Non-Patent Document 1] Charles N. Baroud, Francois Gallaire and Remi Dangla "Dynamics of microfluidic droplets" Lab on a Chip, 2010, 10, p2032-2045

### SUMMARY OF THE INVENTION

### PROBLEMS TO BE SOLVED BY THE INVENTION

The invention has been made in view of the above circumstances, and an object thereof is to provide a droplet producing device that is capable of performing production from a small amount of droplet raw material, and with which there is excellent monodispersity and high productivity with respect to droplets.

### MEANS FOR SOLVING THE PROBLEMS

As a result of performing intensive research closely studied in order to solve the above problems, the present inventors have found that the above problems are solved by a droplet producing device having the following features, and have completed the invention.

That is, the invention provides a droplet producing device, a droplet producing method, a fixture, and a droplet producing kit having the following features.

(1) A droplet producing device including an outer tube; and an inner tube that is arranged inside the outer tube and feeds a droplet raw material, in which an inner tube discharge port opens to an inner tube tip portion formed on a downstream in a fluid feed direction, an outer tube discharge port opens to an outer tube tip portion formed on the downstream in the fluid feed direction, and in which a gap is formed between the outer tube and the inner tube.
(2) The droplet producing device described in the above (1), in which the inner tube discharge port is provided inside the outer tube on an upstream of the outer tube discharge port in the fluid feed direction.
(3) The droplet producing device described in the above (1) or (2), in which an internal diameter b of the outer tube tip portion is 2 to 30 times an internal diameter a of the inner tube tip portion.
(4) The droplet producing device described in any one of the above (1) to (3), in which an internal diameter a of the inner tube tip portion is 0.1 µm to 500 µm.
(5) The droplet producing device described in any one of the above (1) to (4), in which an internal diameter c of the outer tube in the inner tube tip portion is 2 to 100 times an internal diameter a of the inner tube tip portion.
(6) The droplet producing device described in any one of the above (1) to (5), in which an internal diameter b of the outer tube tip portion is 1 µm to 1000 µm.
(7) The droplet producing device described in any one of the above (2) to (6), in which a distance d between the inner tube tip portion and the outer tube tip portion is 2 to 1000 times an internal diameter a of the inner tube tip portion.
(8) A droplet producing method using the droplet producing device described in any one of the above (1) to (7), in which, in the droplet producing device that is in a state where first fluid is introduced into the inside of the inner tube and second fluid is introduced into the gap formed between the outer tube and the inner tube, the first fluid and the second fluid simultaneously feed to the droplet producing device, thereby fluid having the second fluid serving as an outer layer and the first fluid serving as an inner layer is formed and a droplet is formed.
(9) The droplet producing method described in the above (8), in which feeding of the fluid is performed using a centrifugal force.
(10) The droplet producing method described in the above (8) or (9), in which the droplet is formed due to Rayleigh-Plateau instability.
(11) The droplet producing method described in any one of the above (8) to (10), in which the first fluid contains a biomolecule.
(12) A liposome producing method using the droplet producing method described in any one of the above (8) to (11), in which contact with amphipathic molecules arranged at an interface of fluid is performed, and a multiple membrane containing the amphipathic molecules is formed on the surface of the droplet.
(13) A fixture used to arrange the inner tube constituting the droplet producing device described in any one of the above (1) to (7) inside the outer tube, the fixture including an outer tube fixing member that is configured to fix the outer tube; and an inner tube fixing member that is configured to fix the inner tube.
(14) The fixture described in the above (13), in which the outer tube fixing member and the inner tube fixing member are plate-shaped members each having a hole at a central part thereof, and in which the outer tube fixing member and the inner tube fixing member are coupled together by a coupling member, and the outer tube and the inner tube are respectively fitted into the hole of the outer tube fixing member and the hole of the inner tube fixing member, and thereby, the inner tube is arranged inside the outer tube.
(15) The fixture described in the above (13) or (14), in which the coupling member is a screw that rotatably couples the outer tube fixing member and the inner tube fixing member together.
(16) A droplet producing kit including an outer tube; and an inner tube, in which the droplet producing device described in any one of the above (1) to (7) is formed by arranging the inner tube inside the outer tube.
(17) The droplet producing kit described in any one of the above (16), further including the fixture described in any one of the above (13) to (15).

### Effects of Invention

According to the droplet producing device of the invention, it is possible to produce droplets having excellent monodispersity with high productivity from a small amount of droplet raw material.

### BRIEF DESCRIPTION OF THE DRAWINGS

FIGS. 1(a) and 1(b) are perspective views showing an example of an embodiment of a droplet producing device according to the invention.
FIGS. 2(a) to 2(c) are views showing an aspect in which droplets are produced using the droplet producing device according to the invention.
FIG. 3 is a perspective view for showing a preferable shape of the droplet producing device according to the invention.
FIG. 4 is a view showing an aspect in which artificial cell membrane vesicles (liposomes) are produced using the droplet producing device according to the invention.
FIG. 5 is a perspective view showing an example of an embodiment of a fixture according to the invention.
FIGS. 6(a) to 6(c) are front views showing an aspect in which an outer tube and an inner tube are concentrically arranged, in the example of the fixture according to the invention.
FIG. 7(a) is a schematic view showing an aspect in which the fixture and the droplet producing device according to the invention are housed in a droplet recovering tube. FIG. 7(b) is a photograph showing an aspect in which the fixture and the droplet producing device according to the invention are housed in the droplet recovering tube.
FIG. 8 is a photograph showing an aspect of water-in-oil droplets produced in Example 1.
FIG. 9(a) is a photograph showing an aspect of water-in-oil droplets produced in Example 1. FIG. 9(b) is a photograph showing an aspect of water-in-oil droplets produced in Example 2. FIG. 9(c) is a photograph showing an aspect of water-in-oil droplets produced in Example 3. FIG. 9(d) is a graph showing the size distribution of the water droplets produced in Examples 1 to 3.
FIG. 10 is a graph showing a relationship between an average value in the water droplets produced in Examples 1 to 3, and the internal diameter of an inner tube tip portion.
FIG. 11 is a graph showing evaluation of monodispersity of water droplets produced in Examples 1 to 9.
FIG. 12 is a photograph showing an aspect of a green fluorescent protein produced within droplets in Example 10.
FIG. 13 is a photograph showing an aspect of liposome produced in Example 11.

### EMBODIMENTS FOR CARRYING OUT THE INVENTION

### «Droplet Producing Device»

A droplet producing device of the invention is a droplet producing device including an outer tube, and an inner tube that is arranged inside the outer tube and feeds a droplet raw material, an inner tube discharge port opens to an inner tube tip portion formed on a downstream side in a fluid feed direction, an outer tube discharge port opens to an outer tube tip portion similarly formed on the downstream side in the fluid feed direction, and a gap is formed between the outer tube and the inner tube. In the gap, the fluid that is not mixed with or is not easily mixed with the droplet raw material is fed.

The sectional shapes of flow channels of the outer tube and the inner tube are not particularly limited, and can be circular shapes, elliptical shapes, polygonal shapes, or the like. It is preferable that the shape of an inner tube be a shape in which the inner tube does not have a portion that touches an outer tube-inner wall so that the gap can be formed without interruption around the inner tube.

In addition, although values of preferable internal diameters of the flow channels will be described below, in cases where the sectional shapes of the flow channels are not true circles, the cross-sectional areas of the flow channels can be converted from almost the same true circles, and can be the values of the preferable internal diameters.

### <First Embodiment>

The droplet producing device of the present embodiment is a droplet producing device including an outer tube and an inner tube that are concentrically arranged, an inner tube discharge port opens to an inner tube tip portion formed on a downstream side in a fluid feed direction, an outer tube discharge port opens to an outer tube tip portion similarly formed on the downstream side in the fluid feed direction, and a gap is formed between the outer tube and the inner tube.

Hereinafter, an example of an embodiment of the droplet producing device according to the invention will be described with reference to the drawings.

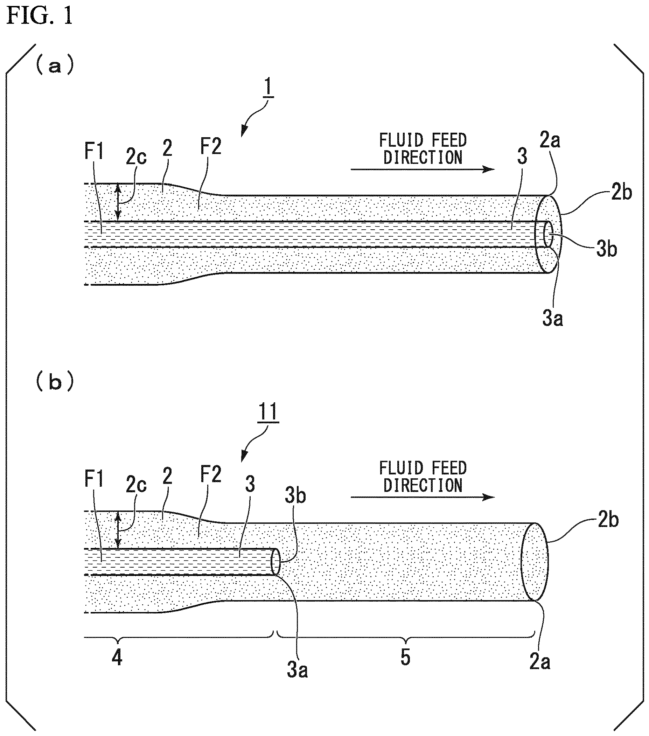

FIG. 1(a) shows the example of the embodiment of the droplet producing device according to the invention. A droplet producing device 1 of the present embodiment has an outer tube 2 and an inner tube 3 that are concentrically arranged. The sectional shapes of flow channels of the outer tube and the inner tube are true circles. As shown in FIGS. 1(a) and 1(b), the inner tube 3 is arranged inside the outer tube 2, and a gap 2c is formed between the outer tube 2 and the inner tube 3. In more detail, the gap 2c is formed between an inner wall of the outer tube 2 and an outer wall of the inner tube 3.

The inside of the inner tube 3 is filled with fluid F1. The gap 2c is filled with fluid F2. In addition, the fluid F1 and the fluid F2 are not constituent elements of the droplet producing device of the present embodiment.

The fluid F1 and the fluid F2 are fed in an axial direction of the outer tube 2 and the inner tube 3. Fluid feed directions of fluid F1 in the inner tube 3 and fluid F2 in the outer tube 2 are the same as each other. When a fluid feed direction in the droplet producing device 1 of the present embodiment is a direction indicated by an arrow in FIGS. 1(a) and 1(b), an inner tube discharge port 3b opens to an inner tube tip portion 3a, and an outer tube discharge port 2b opens to an the outer tube tip portion 2a.

### <Second Embodiment>

In the droplet producing device 11 of the present embodiment, the inner tube discharge port of the droplet producing device of the first embodiment is provided inside the outer tube on an upstream side than the outer tube discharge port in the fluid feed direction. Description of the same points as those of in the droplet producing device of the first embodiment will be omitted.

As shown in FIG. 1(b), the inner tube discharge port 3b is provided inside the outer tube 2 on the upstream side of the outer tube discharge port 2b in the fluid feed direction. In this way, the droplet producing device 11 of the present embodiment has a composite tube unit 4 composed of the outer tube 2 and the inner tube 3 on the upstream side of the inner tube tip portion 3a in the fluid feed direction, and has a single tube unit 5 composed of the outer tube 2 on the downstream side of the inner tube tip portion 3a in the fluid feed direction.

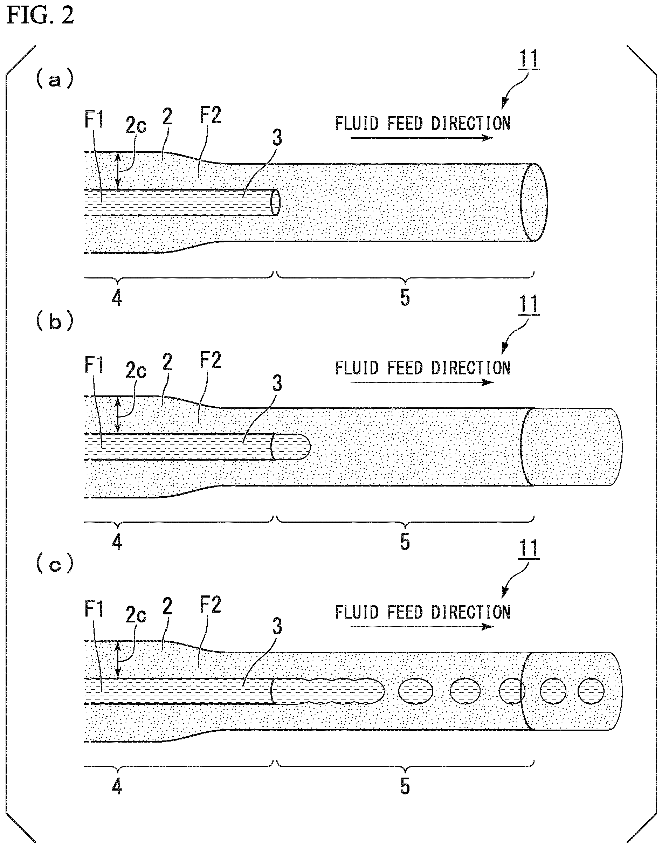

FIGS. 2(a) to 2(c) are views schematically showing an aspect in which droplets are produced using the droplet producing device 11 according to the invention. In the droplet producing device 11, the composite tube unit 4 is in a state where the fluid F2 is introduced into the gap 2c formed between the outer tube 2 and the inner tube 3 and the fluid F1 is introduced into the inside of the inner tube 3 (FIG. 2(a)). The fluid F1 is the droplet raw material. Additionally, the single tube unit is in a state where the fluid F2 is introduced into the inside of the outer tube. Here, the fluid F1 and the fluid F2 are fed in a direction indicated by an arrow in FIG. 2(b). Then, the fluid F1 and the fluid F2 are fed with the concentrical positional relationship between the outer tube 2 and the inner tube 3 maintained, and a laminar flow in which the fluid F2 is an outer layer and the fluid F1 is an inner layer is formed in the single tube unit 5 (FIG. 2(b)). If the fluid F1 and the fluid F2 further advances, the flow of the fluid F1 that is an inner layer becomes discontinuous, and droplets of the fluid F1 are formed from the tip (downstream side) of the flow of the fluid F1.

It is considered that the flow of the fluid F1 becoming discontinuous is caused by the flow between fluid F1 and the fluid F2 in the single tube unit 5 becoming unstable due to the Rayleigh-Plateau instability.

Since the droplet producing device 1 has the outer tube 2 and the inner tube 3 and a gap is formed between the outer tube 2 and the inner tube 3, the droplets of the fluid F1 can be extremely easily produced from a small amount of the droplet raw material simply by arranging fluid (fluid F1) of a small amount of the droplet raw material inside the inner tube 3, arranging fluid (fluid F2) that is not mixed with or not easily mixed with the droplet raw material in the gap 2c, and performing fluid feed. Then, the produced droplets have high-quality droplets having excellent monodispersity.

In the droplet producing device 11, since the laminar flow in which the fluid F2 is an outer layer and the fluid F1 is an inner layer by forming the single tube unit 5 surrounded by the outer tube 2 is efficiently formed, droplets having excellent monodispersity can be more efficiently produced. The amount of the fluid F1 required for production of the droplets of the fluid F1 is only the amount thereof introduced into the inner tube 3, and according to the droplet producing device 1 of the present embodiment, it is possible to produce droplets from a small amount of the droplet raw material. Additionally, a large number of droplets can be produced in a short time, without requiring complicated fluid feed control.

### <Preferable Shape of Droplet Producing Device>

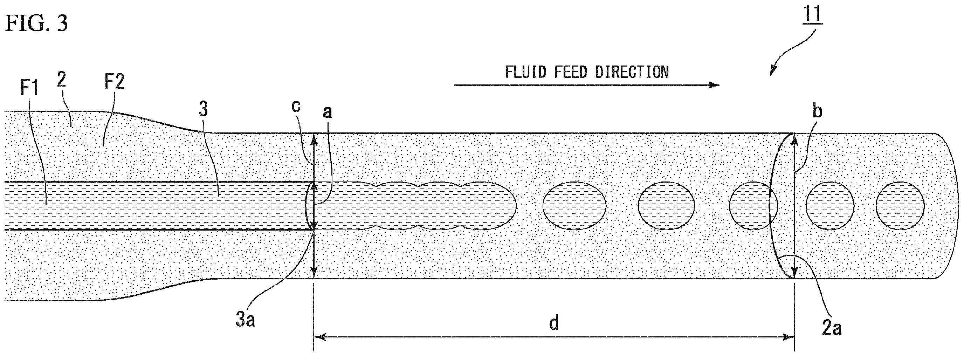

Next, a preferable shape of the droplet producing device according to the invention will be described with reference to FIG. 3, from a viewpoint that production of droplets having excellent monodispersity is more easily enabled.

An internal diameter a of the inner tube tip portion 3a of the inner tube 3 that constitutes the droplet producing device 11 is preferably 0.1 µm to 500 µm, more preferably 1 µm to 100 µm, and still more preferably 5 µm to 30 µm. In the droplet producing device 11 in which the internal diameter a of the inner tube tip portion 3a is within the above range, droplets to be produced follow the law of micro hydrodynamics. Therefore, it is possible to more easily produce droplets having excellent monodispersity. Additionally, the diameter of the droplets to be produced and the internal diameter a tend to show a positive correlation, and size control of the droplets to be produced can be more easily performed.

The ratio of the internal diameter a of the inner tube tip portion 3a and an internal diameter b of the outer tube tip portion 2a is not particularly limited if the laminar flow in which the fluid F2 is an outer layer and the fluid F1 is an inner layer can be formed. However, from a viewpoint of enabling droplets having excellent monodispersity to be more easily produced, as for the ratio of the internal diameter a and the internal diameter b, the internal diameter b is preferably 2 to 30 times, more preferably 3 to 20 times, still more preferably 4 to 18 times, still more preferably 4.5 to 15 times, and particularly preferably 5 to 10 times the internal diameter a.

In the production of droplets having excellent monodispersity, in the single tube unit 5, it is preferable that the laminar flow in which the fluid F2 is an outer layer and the fluid F1 is an inner layer be formed. The shape of the laminar flow is also determined by the ratio of an internal diameter c and the internal diameter a. Although the ratio of the internal diameter c and the internal diameter a is not particularly limited if a laminar flow can be formed, as a preferable ratio of the internal diameter c and the internal diameter a, the internal diameter c of the outer tube in the inner tube tip portion 3a is preferably approximately 2 to 100 times, more preferably approximately 3 to 50 times, and still more preferably approximately 5 to 10 times larger than the internal diameter a of the inner tube tip portion 3a. If the ratio of the internal diameter c and the internal diameter a is within the above range, droplets having excellent monodispersity are more easily obtained.

In addition, since the internal diameter c and the internal diameter b indicate the same portion in a case where the inner tube tip portion 3a coincides with the outer tube tip portion 2a like the above-described droplet producing device 1, the ratio of the internal diameter a and the internal diameter c is the same as the above-described ratio of the internal diameter a and the internal diameter b.

The internal diameter b of the outer tube tip portion 2a is preferably 1 µm to 1000 µm, more preferably 10 µm to 400 µm, still more preferably 40 µm to 100 µm, and particularly preferably 40 µm to 60 µm. If the internal diameter b is 1000 µm or less, the diameter of droplets to be produced and the internal diameter a tend to show a positive correlation. Since it is difficult that fluid discharged from the outer tube tip portion 2a swells in the shape of a drop of water particularly if the internal diameter b is equal to or less than 60 µm, the diameter of droplets to be produced and the internal diameter a tend to show a positive correlation. For this reason, the size control of droplets is easier.

Droplets are sequentially formed from the tip (downstream side) of the flow of the fluid F1. Since the droplet producing device 11 has the single tube unit 5, fluid is efficiently feed by the outer tube 2 that constitutes the single tube unit 5. In this way, it is preferable that droplets be formed in the single tube unit 5. Usually, the distance required for formation of droplets is approximately 10 times the internal diameter of the droplets. Therefore, a distance d between the inner tube tip portion 3a and the outer tube tip portion 2a is preferably approximately 2 to 1000 times, more preferably approximately 5 to 500 times, and still more preferably approximately 7 to 300 times the internal diameter a of the inner tube tip portion.

It is preferable that the droplet producing device of the invention be a centrifugal droplet producing device capable of producing droplets by feeding the droplet raw material with a centrifugal force. The centrifugal droplet producing device has a structure that is suitable to produce droplets with a centrifugal force using a centrifugal separator or the like, and has, for example, strength of such a degree that the device is not damaged even if a centrifugal force capable of producing droplets is applied.

Additionally, from a viewpoint of facilitating the fluid feed with the centrifugal force using the centrifugal separator, the length of the droplet producing device 11 is preferably within a range of 0.1 cm to 30 cm, more preferably within a range of 0.5 cm to 15 cm, and still more preferably within a range of 1 cm to 5 cm.

Constituent materials of the outer tube 2 and the inner tube 3 are not particularly limited, and for example, materials, such as resin, metal, and glass, can be used. Especially, it is preferable that glass be used as a constituent member of the outer tube 2 and the inner tube 3. As for the glass tube, production of a tube of a fine internal diameter is easy by heating and drawing a commercially available glass tube, and if the glass tube is cut in portions having desired diameters, the outer tube 2 and the inner tube 3 have the desired diameters can be easily obtained.

### «Droplet Producing Method»

The droplet producing method of the invention is a droplet producing method using the droplet producing device of the invention. In the droplet producing device that is in a state where first fluid is introduced into the inside of the inner tube and second fluid is introduced into the gap formed between the outer tube and the inner tube, the first fluid and the second fluid simultaneously feed to the droplet producing device, thereby fluid having the second fluid serving as an outer layer and the first fluid serving as an inner layer is formed.

As an example, the droplet producing method of the invention is a droplet producing method using the droplet producing device 11 of the second embodiment shown in the above-described «Droplet Producing Device». The first fluid corresponds to the fluid F1, and the second fluid corresponds to the fluid F2. Since the droplet producing method using the droplet producing device 11 overlap that described earlier with reference to FIGS. 2(a) to 2(c) in the description of the above-described «Droplet Producing Device», the description thereof will be omitted. In addition, since fluid in which the second fluid is an outer layer and the first fluid is an inner layer is formed between the inner tube tip portion and the outer tube tip portion in a case where the droplet producing device 11 is used, the fluid feed becomes efficient, and droplets having excellent monodispersity can be more efficiently produced.

According to the droplet producing method using the droplet producing device of the invention, fluid feed work required for production of droplets having excellent monodispersity is sufficient if only the fluid feed work is performed at least once in one direction, complicated fluid feed control is not required, and high productivity of droplets can be realized.

Means for performing the fluid feed is not particularly limited, and can be performed by laws, such as using a pump. However, it is preferable to perform the fluid feed using centrifugal force. The fluid feed using the centrifugal force can be performed using the centrifugal separator or the like. As the centrifugal separator, a desktop small-sized centrifuge is preferable. The droplet producing method of the invention is also excellent in that the fluid feed can be simply performed using the desktop small-sized centrifuge. In a case where fluid feed using a syringe pump is performed by a related-art droplet producing method using a micro-flow channel, the inside of a syringe or a connecting part between the syringe and the flow channel needed to be filled with the droplet raw material fluid. Therefore, since an extra droplet raw material that may become a dead volume is required for the inside of the syringe or the connecting part between the syringe and the flow channel, several milliliters of the droplet raw material fluid is usually required in order to produce, for example, 10,000 droplets with a diameter of 10 µm.In contrast, in a case where feeding of the fluid is performed by the centrifugal force using the droplet producing device of the invention, it is not necessary to produce an extra droplet raw material, and the amount of the droplet raw material required for production of the droplets of the fluid F1 is only amount introduced into the inner tube 3. Therefore, 10,000 droplets with a diameter of 10 µm can also be produced from 0.1 µL of the droplet raw material. Additionally, since control of complicated fluid feed is not required in the fluid feed using the centrifugal separator, fluid feed operation can be extremely easily performed as compared to the fluid feed using the pump.

The combination (the combination of the fluid F1 and the fluid F2 in the description of the operation of above-described «Droplet Producing Device») of the first fluid and the second fluid is not particularly limited if this combination is a combination that is a two-liquid phase separation system or a combination in which two fluids are not easily mixed. For example, a preferable combination of the fluid F1 and the fluid F2 includes the combination of oil and water. A combination (water droplets-in-oil) in which the fluid F1 is water and the fluid F2 is oil, or a reverse combination (oil droplets-in-water) in which the fluid F1 is oil and the fluid F2 is water may be provided. The oil includes mineral oils, vegetable oils such as olive oil, silicone oils, decane, or the like. The above water may be in the state of an aqueous solution, and include buffer solutions, solutions originating from biological samples, such as cell extracts, or the like.

Interfaces of droplets may be compartmented by amphipathic molecules. A concern that the droplets may be united is reduced by the interfaces being compartmented by the amphipathic molecules. The amphipathic molecules may include surfactants, lipids, or the like. As the surfactants, Span80, Tween80, Tween20, and TritonX-100, sodium dodecyl sulfate (SDS), or the like are exemplary examples. As the lipids, dioleoylphosphatidylcholine (DOPC), dipalmitoylphosphatidylcholine (DPPC), cholesterols, sphingomyelins, glycolipid gangliosides, or the like are exemplary examples.

Every droplet can be used as a so-called minute test tube. By making a reactant contained within droplets, a number of chemical reactions can be independently caused within each droplet. Since the droplets produced by the droplet producing method of the invention are excellent in monodispersity, measurement results can be used as measurement results of many homogeneous samples. This is useful, for example, when an average value of reaction results is obtained. Additionally, since it is also possible for every droplet to contain different reaction conditions or samples, or the like, many specimens can be screened at once or various conditions can be tried at once. Examples of reactions that can be implemented within droplets include chemical synthesis, gene analysis, PCR, protein crystallization, enzyme activity measurement, and the like.

### <Method of Producing Artificial cell Membrane Vesicle (Liposome)>

According to the droplet producing method of the invention, it is possible to produce minute droplets with a diameter of, for example, approximately 0.1 µm to approximately 500 µm in large quantities. Since a droplet size with a diameter of 0.1 µm to 500 µm includes a diameter of approximately 5 µm to approximately 30 µm that is a general cell size, artificial cell membrane vesicles (liposomes) of a structure that imitates a cell can be produced. In addition, in the invention, the liposomes are included in a droplet.

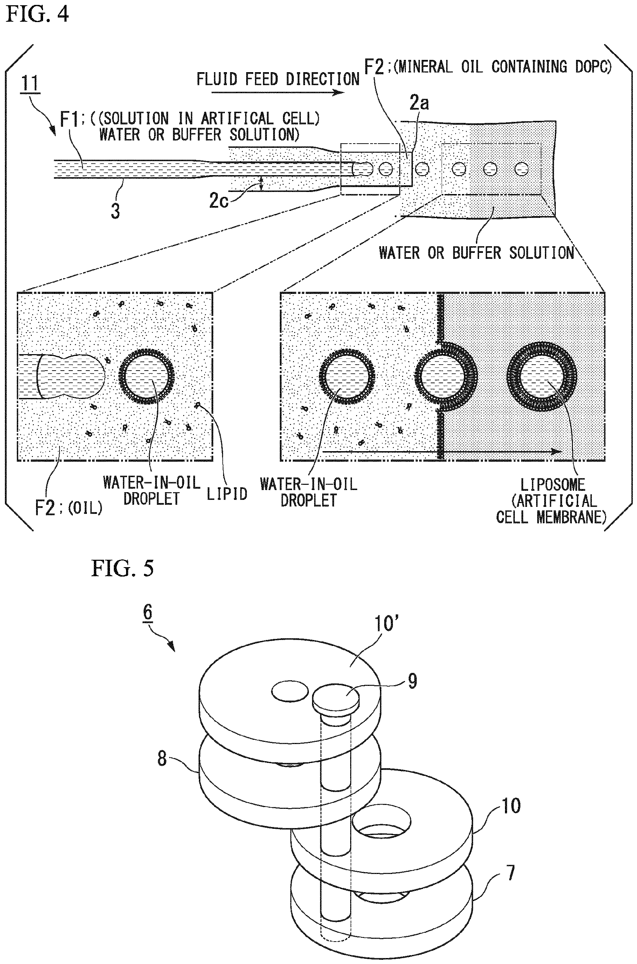

Hereinafter, an example of an aspect in which artificial cell membrane vesicles (liposomes) using the droplet producing device 11 are produced, is schematically shown in FIG. 4. FIG. 4 shows a process in which droplets are produced by the droplet producing device 11. Water or a buffer solution is introduced into the inner tube 3 as the fluid F1. Mineral oil is introduced into the gap 2c as the fluid F2. Dioleoylphosphatidylcholine (DOPC) is contained as the amphipathic molecules in the fluid F2. The outer tube tip portion 2a of the droplet producing device 11 is arranged so as to sink in the same mineral oil as the fluid F2. Moreover, the water or the buffer solution is arranged this time on the downstream side in the fluid feed direction. The DOPC is arranged as amphipathic molecules at an interface between the water or buffer solution and the mineral oil.

First, droplets produced by the droplet producing device 11 are released into the mineral oil from the outer tube tip portion 2a. The droplets released at this time have a lipid single-layer membrane. The droplets go straight on in the fluid feed direction as they are, come in contact with the DOPC arranged at the interface between the mineral oil and the water or buffer solution, and reach the water or buffer solution while being wrapped by the DOPC. At this time, the droplets have a lipid bilayer membrane. In this way, artificial cell membrane vesicles (liposomes) having a lipid bilayer membrane similar to cells can be obtained.

Moreover, artificial cells that are also functionally similar to cells can be obtained by making biomolecules, such as proteins, DNAs, and RNAs, and/or biological substances contained in advance within the fluid F1. It is possible to cause various kinds of metabolic reactions, which usually occur within cells and out of the cells, inside the droplets, using such biomolecules.

Additionally, by making a lipid mixed within the fluid F2 different from a lipid mixed within the mineral oil on the downstream side, an outer layer and an inner layer of the lipid bilayer membrane can be made unsymmetrical.

### «Fixture»

The fixture of the invention is a fixture used to arrange the inner tube constituting the droplet producing device of the invention inside the outer tube, and has an outer tube fixing member that is configured to fix the outer tube, and an inner tube fixing member that is configured to fix the inner tube.

FIG. 5 shows an example of an embodiment of a fixture 6 according to the invention.

An outer tube fixing member 7 and an inner tube fixing member 8 are plate-like members each having a hole at a central part thereof, and the outer tube fixing member 7 and the inner tube fixing member 8 are coupled together by a coupling member 9. The coupling member 9 is a screw that rotatably couples the outer tube fixing member 7 and the inner tube fixing member 8 together. Moreover, supports 10 and 10' that are plate-like members each having a hole at a central part thereof are provided in the fixture 6 in order to support the outer tube and the inner tube to keep a concentric arrangement more effectively.

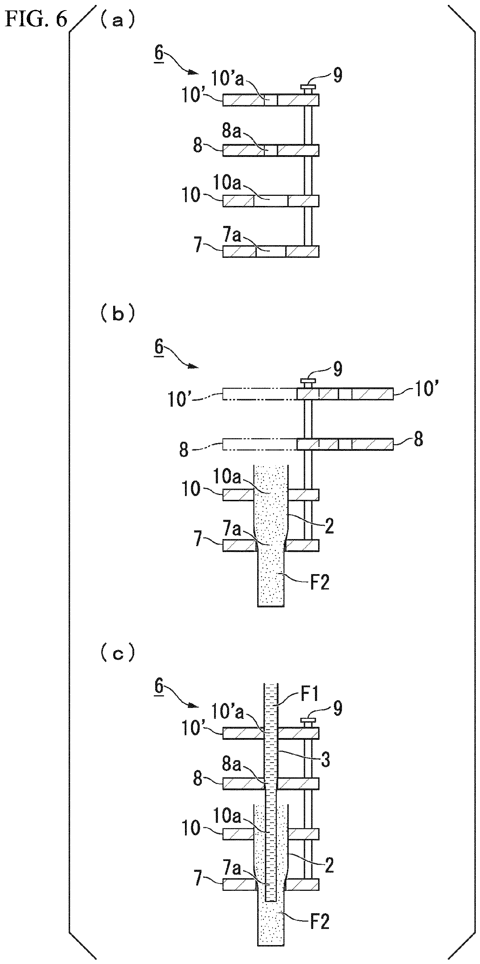

An example of a procedure in which the outer tube 2 and the inner tube 3 are concentrically arranged using the fixture 6 is shown in FIGS. 6(a) to 6(c). In the fixture 6 shown in FIG. 6(a), the holes of the outer tube fixing member 7, the support 10, the inner tube fixing member 8, and the support 10' are arranged in a concentric array.

First, the inner tube fixing member 8 and the support 10' are rotated, the center of the hole of each of the outer tube fixing member 7 and the support 10 and the center of the hole of each of the inner tube fixing member 8 and the support 10' are shifted from each other, and the outer tube 2 is inserted into the respective holes of the outer tube fixing member 7 and the support 10 (FIG. 6(b)). Here, since the outer tube 2 has a larger external diameter as being nearer to the upstream side in the fluid feed direction, the outer tube 2 passes through a hole 7a provided in the outer tube fixing member 7, and thereby, the outer tube 2 is fitted and the outer tube 2 is fixed.

Next, the inner tube fixing member 8 and the support 10' are rotated, the center of the hole of each of the outer tube fixing member 7 and the support 10 and the center of the hole of each of the inner tube fixing member 8 and the support 10' are made to coincide with each other, and the inner tube 3 is inserted into the respective holes of the inner tube fixing member 8 and the support 10' (FIG. 6(c)). Here, since the inner tube 3 also made to have a larger external diameter as being nearer to the upstream side in the fluid feed direction, the inner tube 3 is passed through a hole 8a provided in the inner tube fixing member 8, and thereby, the inner tube 3 is fitted and the inner tube 3 is fixed. In this way, the outer tube 2 and the inner tube 3 can be concentrically arranged.

In the fixture 6, the outer tube fixing member 7, the support 10, the inner tube fixing member 8, and the support 10' are coupled together by the coupling member 9 that is a screw. Therefore, it is possible to rotate the respective members to adjust the distances between the members. Even if the outer tube 2 and the inner tube 3 are not concentrically arranged because the distance between the outer tube fixing member 7 and the inner tube fixing member 8 is too large, the distance between the outer tube fixing member 7 and the inner tube fixing member 8 can be adjusted by making the distance small so that the inner tube 3 may be concentrically arranged within the outer tube 2.

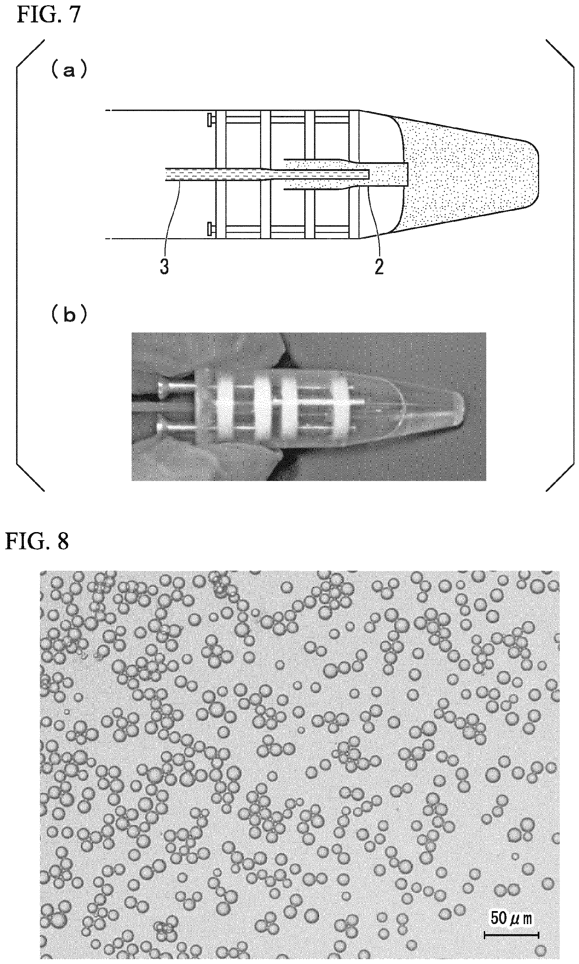

Meanwhile, the droplets produced by the droplet producing device may be accumulated within a container arranged on the downstream side in the fluid feed direction of the droplet raw material. The fixture 6 may be used to attach the inner tube and the outer tube to the container, in addition to being used to arrange the inner tube inside the outer tube. For example, by inserting a portion or all of the fixture 6 into the container and making the surfaces of the constituent members of the fixture 6, such as the outer tube fixing member 7, the inner tube fixing member 8, the support 10, and the support 10' abut against an inner wall surface of the container, it is possible to attach the inner tube and the outer tube to the inside of the container (also refer to FIGS. 7(a) and 7(b) to be described below).

### «Droplet Producing Kit»

The droplet producing kit of the invention forms the droplet producing device of the invention by including the outer tube and the inner tube and arranging the inner tube inside the outer tube. The droplet producing device is represented by the above-described droplet producing device 1 and the above-described droplet producing device 11.

Additionally, the droplet producing kit of the invention may further include the fixture of the invention, and the container for accumulating the droplet raw material, a reagent such as the amphipathic molecules, and the produced droplets, and the like. The fixture is represented by the above-described fixture 6.

In the droplet producing kit of the invention, the inner tube 3 that constitutes the droplet producing device may include a plurality of types of inner tubes 3 in which the internal diameters of the inner tube tip portions 3 a are different from each other for the purpose of enabling droplets with a plurality of types of size to be produced. According to the droplet producing kit including the inner tube 3 in which the internal diameters of the inner tube tip portions 3a are different from each other, droplets with a plurality of types of size can be simply produced by exchanging the inner tube 3.

Next, although the invention will be described in more detail by showing examples, the invention is not limited to the following examples.

### Examples

### <Example 1 >

### [Production of Droplet Producing Device to which Inner Tube and Outer Tube are Fixed Using Fixture]

### (Inner Tube and Outer Tube)

The outer tube 2 and the inner tube 3 having the following shapes were made by drawing a commercially available glass tube (Manufacturer: Narishige, Model Number: G-1, Manufacturer: World Precision Instruments, Model Number: 1B200-6), using a puller (Manufacturer: Narishige, Model Number-PC-10).
Inner diameter a of inner tube tip portion 3a: 10 µm
Internal diameter b of outer tube tip portion 2a: 60 µm

### (Fixture)

Polyacetal resin was machined, four plates in which that a hole with a diameter of 0.2 cm is provided at a central part were made with a diameter of 0.9 cm and a thickness of 0.2 cm, and the respective plates were formed as the outer tube fixing member 7, the support 10, the inner tube fixing member 8, and the support 10'. Moreover, two screw holes for allowing two screws (Specification: M2x15) to pass therethrough were provided at the same positions at ends of the respective plates. A first screw was passed through the outer tube fixing member 7, the support 10, the inner tube fixing member 8, and the support 10' in the order shown in FIGS. 5 and 6.

### (Introduction of Fluid)

9 µL of hexadecane containing 2% (w/w) of Span80 was enclosed inside the outer tube 2.

The inner tube tip portion 3a was dipped in water, and 0.1 µL of water was suctioned to the inside of the inner tube 3 according to the capillary phenomenon. In addition, approximately 10 µL of water can be enclosed inside in the inner tube 3.

### (Fixation of Inner Tube and Outer Tube)

In the procedure shown in FIGS. 6(a) to 6(c), the outer tube 2 and the inner tube 3 were concentrically arranged using the fixture 6. Accordingly, the hexadecane containing Span80 was introduced into the gap 2c formed between the outer tube 2 and the inner tube 3, and water is introduced into the inside of the inner tube 3. The distance d between the inner tube tip portion 3a and the outer tube tip portion 2a was 2000 µm, and the internal diameter c of the outer tube in the inner tube tip portion 3a was 115 µm. A second screw was passed through the outer tube fixing member 7, the support 10, the inner tube fixing member 8, and the support 10' to fix them.

### [Preparation of Droplet Recovery]

A commercially available 1.5-mL tube (Manufacturer: Nikkyo Technos Co., Ltd., Model Number: MP-150HC) was filled with 100 µL of hexadecane, and the fixture 6 that fixed the outer tube 2 and the inner tube 3 was housed in the tube (FIGS. 7(a) and 7(b)). In this case, the outer tube tip portion was immersed in the hexadecane fluid accumulated at the bottom of the tube.

### [Production of Droplet]

The tube was set in the desktop small-sized centrifuge (Manufacturer: High-Tech Corporation, Model Number: ATT-101), and was subjected to centrifugation for 3 seconds with a centrifugal force of 1200 G (the maximum output of the used desktop small-sized centrifuge), the hexadecane and the water was simultaneously fed, and water droplets was produced due to the Rayleigh-Plateau instability. The produced water droplets were released into the hexadecane accumulated at the bottom of the tube.

### [Checking of Droplet]

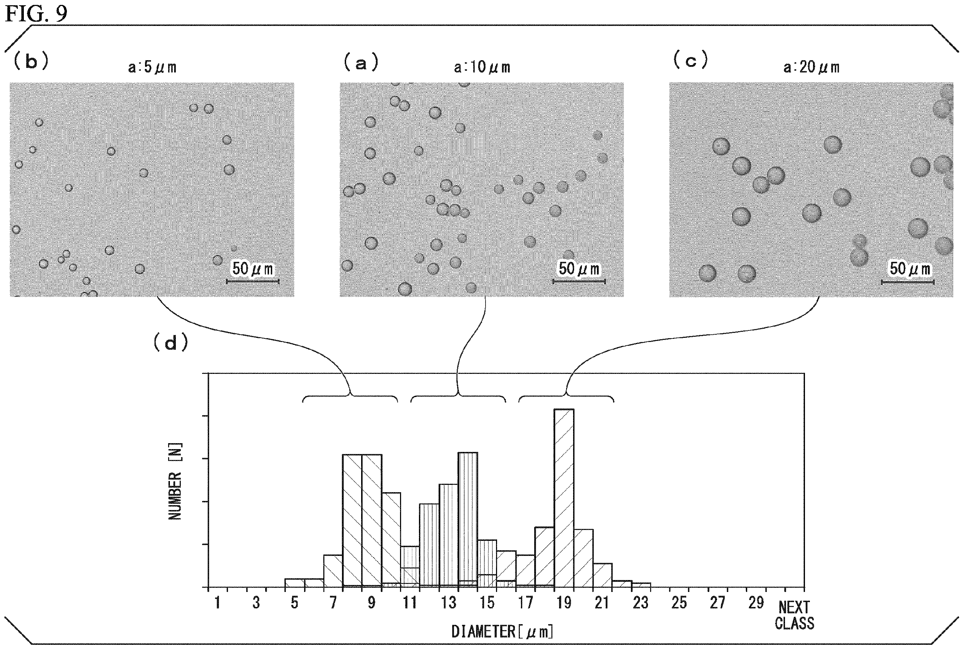

Images of the water droplets produced in Example 1 are shown in FIGS. 8 and 9(a). Approximately 50,000 droplets could be produced with the fluid feed operation for 3 seconds.

### <Example 2>

Except that the internal diameter a of the inner tube tip portion 3a was 5 µm in making the droplet producing device of Example 1, a droplet producing device was made like Example 1, and droplets were produced.

### [Checking of Droplets]

An image of the water droplets produced in Example 2 is shown in FIG. 9(b).

### <Example 3>

Except that the internal diameter a of the inner tube tip portion 3a was 20 µm in making the droplet producing device of Example 1, a droplet producing device was made like Example 1, and droplets were produced.

### [Checking of Droplets]

An image of the water droplets produced in Example 3 is shown in FIG. 9(c).

### <Comparison of Water Droplets Produced in Examples 1 to 3>

The results obtained by measuring the size of the water droplets produced in Examples 1 to 3 are shown in a graph of FIG. 9(d). It can be seen from the graph of FIG. 9(d) that droplets having excellent monodispersity could be produced in large quantities in a short time.

The internal diameter (a) of the inner tube tip portion and the diameter size (x) of the water-in-oil droplets have the following values.
a = 5 µm, x = 8.0 ± 3.0 µm
a = 10 µm, x = 13.0 ± 3.3 µm
a = 20 µm, x = 18.5 ± 4.2 µm

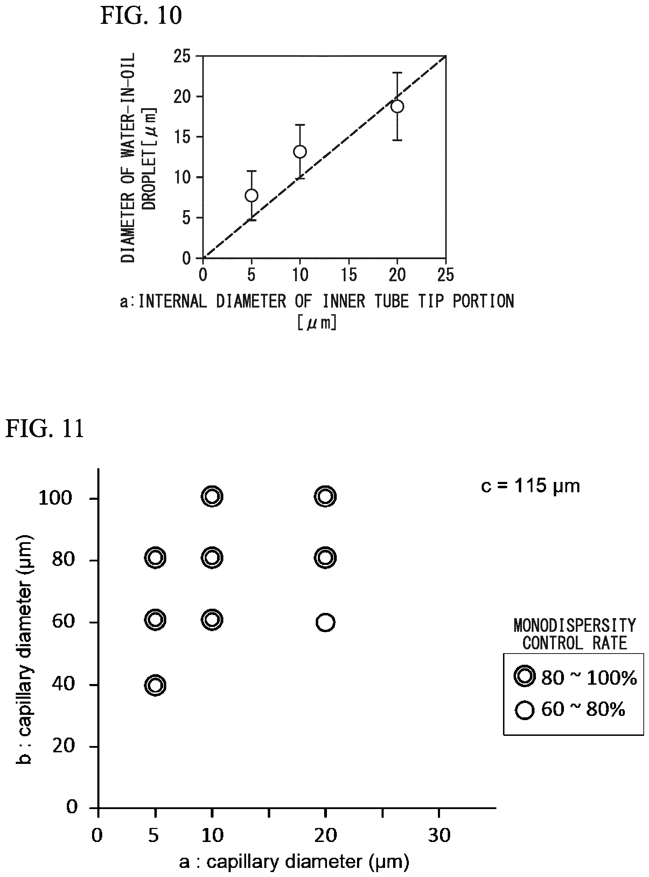

These values are shown in a graph in FIG. 10. It can be seen that the internal diameter of the inner tube tip portion and the diameter of the water-in-oil droplets are in a substantially proportional relation. This shows that the diameter of the water droplets is controllable simply by changing the internal diameter (a) of the tip portion of the inner tube.

### <Investigation of Ratio of Internal Diameter a of Inner Tube Tip Portion and Internal Diameter b of Outer Tube Tip Portion>

Similar to Examples 1 to 3, inner tubes of which the internal diameters a are respectively 5 µm, 10 µm, and 20 µm were manufactured, and outer tubes of which the internal diameter b are respectively 40 µm, 60 µm, 80 µm, and 100 µm were manufactured. Droplet producing devices having the following shapes were manufactured by combining the outer tubes and the inner tubes together.

**[Table 1]**

| | Internal Diameter (a) µm | Internal Diameter (b) µm | Internal Diameter (c) µm |
|---|---|---|---|
| Example 4 | 5 | 40 | 115 |
| Example 2 | 5 | 60 | 115 |
| Example 5 | 5 | 80 | 115 |
| Example 1 | 10 | 60 | 115 |
| Example 6 | 10 | 80 | 115 |
| Example 7 | 10 | 100 | 115 |
| Example 3 | 20 | 60 | 115 |
| Example 8 | 20 | 80 | 115 |
| Example 9 | 20 | 100 | 115 |

Next, droplets were produced by the same method as that shown in Example 1, and the monodispersity of the diameter of the droplets was evaluated. The evaluation of the monodispersity was calculated as Monodispersity Control rate = Number of Times by which that Results of Monodispersity are Obtained / Total Number of Trials. If standard deviation was 3 µm to 4 µm, the results of the monodispersity were obtained. The total number of trials was at least 3 times in all of the respective examples.

The results are shown in FIG. 11. The droplets produced by the droplet producing devices of Examples 1 to 9 have a monodispersity control rate of 60% or more, and according to these droplet producing devices, it is shown that the droplets having excellent monodispersity can be produced. Particularly, the droplets produced by the droplet producing devices of Examples 1, 2, and 4 to 9 have a monodispersity control rate of 80% or more, and according to these droplet producing devices, it is shown that the droplets having extremely excellent monodispersity can be produced.

### <Example 10: Synthesis of Fluorescent Protein>

Protein synthesis was performed within droplets produced using a droplet producing device. First, a buffer solution including a protein expression system (a template DNA of a green fluorescent protein (GFP), an amino acid, various factors required for protein synthesis) was introduced into the inside of the inner tube, and droplets were produced. The produced droplets were accumulated in the 1.5-mL tube.

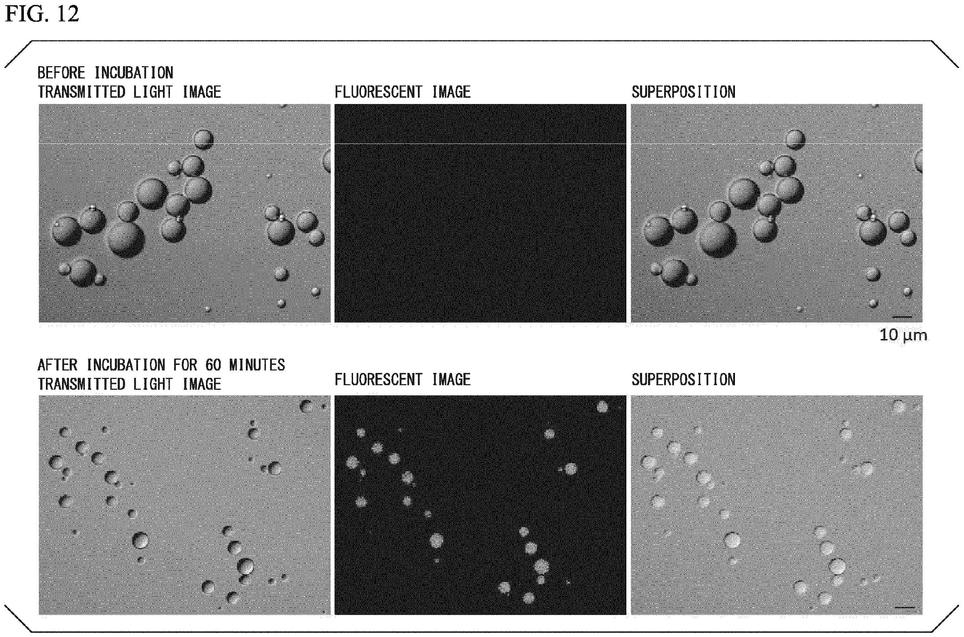

Next, the 1.5-mL tube was incubated at 37°C. Accordingly, information on the template DNA is transferred, RNA is synthesized, information on the RNA is translated, and a protein is synthesized. Aspects of the droplets before 37°C incubation and after 37°C incubation are shown in FIG. 12. This time, since the expressed protein was GFP, green fluorescence was observed only within the droplets. It was shown that protein synthesis is possible within the droplets produced by the droplet producing device according to the invention.

### < Example 11: Production of Liposome>

In the droplet producing device shown in the above Example 1, and the production of droplets using the same, liposomes was produced similar to Example 1 except that mineral oil containing L-α-phosphatidylcholine (Egg PC (100%)) in a final concentration of 5 mM was introduced instead of the hexadecane containing Span80 introduced into the gap 2C, and the mineral oil containing L-α-phosphatidylcholine (Egg PC (100%)) in a final concentration of 5 mM, and water were introduced instead of the hexadecane poured into the 1.5mL tube. Within the above 1.5-mL tube, the Egg PC is arranged uniformly at the interface between the mineral oil and the water.

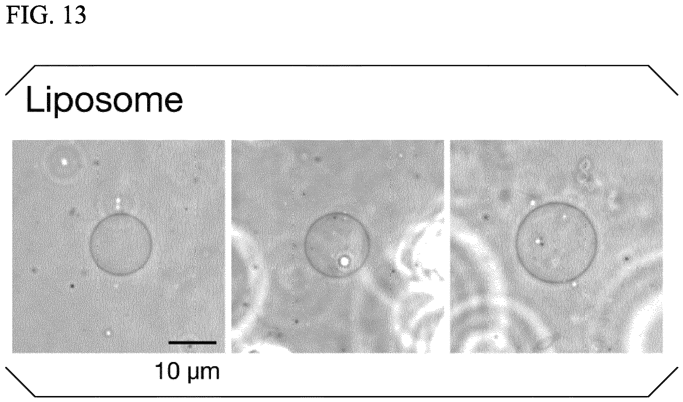

Images of the liposomes produced in Example 11 are shown in FIG. 13. According to the present example, it was shown that the liposomes can be produced by the droplet producing device shown in the above Example 1.

The internal diameter (a) of the inner tube tip portion and the diameter size (x) of the liposomes have the following values.
a = 10 µm, x = 10.0 ± 4.0 µm

The respective components in the respective embodiments described above, combinations thereof, and the like are examples. Additions, omissions, substitutions, and other modifications of the components can be made without departing from the invention. Additionally, the invention is not limited by the respective embodiments, and is limited only by the scope of the claims.

### Industrial Applicability

The invention is broadly applicable to chemistry-related fields, physics-related fields, biology-related fields, and the like, and are also applicable to chemosynthesis, gene analysis, and the like. Additionally, as shown in the example, the invention is also applicable to protein synthesis within droplets, and production of artificial cell membrane vesicles (liposomes). Thus, the invention is suitably applicable particularly to biology-related fields and medicine-related fields.

### DESCRIPTION OF REFERENCE NUMERAL

- 1, 11:: DROPLET PRODUCING DEVICE
- 2:: OUTER TUBE
- 2a:: OUTER TUBE TIP PORTION
- 2b:: OUTER TUBE DISCHARGE PORT
- 2c:: GAP
- 3:: INNER TUBE
- 3a:: INNER TUBE TIP PORTION
- 3b:: INNER TUBE DISCHARGE PORT
- 4:: COMPOSITE TUBE UNIT
- 5:: SINGLE TUBE UNIT
- 6:: FIXTURE
- 7:: OUTER TUBE FIXING MEMBER
- 8:: INNER TUBE FIXING MEMBER
- 9:: COUPLING MEMBER
- 1010':: SUPPORT
- F1, F2:: FLUID

## Claims

1. A droplet producing device comprising:
an outer tube; and
an inner tube that is arranged inside the outer tube and feeds a droplet raw material,
wherein an inner tube discharge port opens to an inner tube tip portion formed on a downstream in a fluid feed direction, an outer tube discharge port opens to an outer tube tip portion formed on the downstream in the fluid feed direction, and
wherein a gap is formed between the outer tube and the inner tube.

2. The droplet producing device according to Claim 1,
wherein the inner tube discharge port is provided inside the outer tube on an upstream of the outer tube discharge port in the fluid feed direction.

3. The droplet producing device according to Claim 1 or 2,
wherein an internal diameter b of the outer tube tip portion is 2 to 30 times an internal diameter a of the inner tube tip portion.

4. The droplet producing device according to any one of Claims 1 to 3,
wherein an internal diameter a of the inner tube tip portion is 0.1 µm to 500 µm.

5. The droplet producing device according to any one of Claims 1 to 4,
wherein an internal diameter c of the outer tube in the inner tube tip portion is 2 to 100 times an internal diameter a of the inner tube tip portion.

6. The droplet producing device according to any one of Claims 1 to 5,
wherein an internal diameter b of the outer tube tip portion is 1 µm to 1000 µm.

7. The droplet producing device according to any one of Claims 2 to 6,
wherein a distance d between the inner tube tip portion and the outer tube tip portion is 2 to 1000 times an internal diameter a of the inner tube tip portion.

8. A droplet producing method using the droplet producing device according to any one of Claims 1 to 7,
wherein, in the droplet producing device that is in a state where first fluid is introduced into the inside of the inner tube and second fluid is introduced into the gap formed between the outer tube and the inner tube, the first fluid and the second fluid simultaneously feed to the droplet producing device, thereby fluid having the second fluid serving as an outer layer and the first fluid serving as an inner layer is formed and a droplet is formed.

9. The droplet producing method according to Claim 8,
wherein feeding of the fluid is performed using a centrifugal force.

10. The droplet producing method according to Claim 8 or 9,
wherein the droplet is formed due to Rayleigh-Plateau instability.

11. The droplet producing method according to any one of Claims 8 to 10,
wherein the first fluid contains a biomolecule.

12. A liposome producing method using the droplet producing method according to any one of Claims 8 to 11,
wherein contact with amphipathic molecules arranged at an interface of fluid is performed, and a multiple membrane containing the amphipathic molecules is formed on the surface of the droplet.

13. A fixture used to arrange the inner tube constituting the droplet producing device according to any one of Claims 1 to 7 inside the outer tube, the fixture comprising:
an outer tube fixing member that is configured to fix the outer tube; and
an inner tube fixing member that is configured to fix the inner tube.

14. The fixture according to Claim 13,
wherein the outer tube fixing member and the inner tube fixing member are plate-shaped members each having a hole at a central part thereof, and
wherein the outer tube fixing member and the inner tube fixing member are coupled together by a coupling member, and the outer tube and the inner tube are respectively fitted into the hole of the outer tube fixing member and the hole of the inner tube fixing member, and thereby, the inner tube is arranged inside the outer tube.

15. The fixture according to Claim 14,
wherein the coupling member is a screw that rotatably couples the outer tube fixing member and the inner tube fixing member together.

16. A droplet producing kit comprising:
an outer tube; and
an inner tube,
wherein the droplet producing device according to any one of Claims 1 to 7 is formed by arranging the inner tube inside the outer tube.

17. The droplet producing kit according to Claim 16, further comprising:
the fixture according to any one of Claims 13 to 15.
